**Europäisches Patentamt**

**European Patent Office**

**Office européen des brevets**

(19)

(11) **EP 1 496 590 A2**

(12) **EUROPÄISCHE PATENTANMELDUNG**

| | |
|---|---|
| (43) Veröffentlichungstag:<br>**12.01.2005 Patentblatt 2005/02** | (51) Int Cl.$^7$: **H02H 7/06**, H02H 6/00 |

(21) Anmeldenummer: **04011036.3**

(22) Anmeldetag: **10.05.2004**

| | |
|---|---|
| (84) Benannte Vertragsstaaten:<br>**AT BE BG CH CY CZ DE DK EE ES FI FR GB GR HU IE IT LI LU MC NL PL PT RO SE SI SK TR**<br>Benannte Erstreckungsstaaten:<br>**AL HR LT LV MK** | (72) Erfinder:<br>• **Herbig, Ralf**<br>  **70839 Gerlingen (DE)**<br>• **Homeyer, Kai-Oliver**<br>  **71634 Ludwigsburg (DE)**<br>• **Kohl, Walter**<br>  **74389 Cleebronn (DE)** |
| (30) Priorität: **11.07.2003 DE 10331506** | |
| (71) Anmelder: **ROBERT BOSCH GMBH**<br>**70442 Stuttgart (DE)** | |

(54) **Verfahren und Vorrichtung zum Bestimmen der Generatortemperatur aus dem Erregerstrom**

(57)   Die Erfindung betrifft eine Vorrichtung sowie ein Verfahren zur Bestimmung der Generatortemperatur ($T_{Gen}$) eines Generators (4) mit einer Erregerwicklung (L), die in einem Erregerkreis (10) angeordnet ist. Die Bestimmung der Generatortemperatur ($T_{Gen}$) kann ohne Einsatz eines Temperatursensors erfolgen, indem der Widerstand ($R_L$) der Erregerwicklung (L) durch Messung des Erregerstroms ($I_{err}$) und der an der Erregerwicklung (L) abfallenden Spannung ($U_L$) bestimmt und daraus die Generatortemperatur ($T_{Gen}$) ermittelt wird.

Fig. 1

EP 1 496 590 A2

**Beschreibung**

Die Erfindung betrifft eine Vorrichtung zum Bestimmen der Generatortemperatur eines Generators mit Erregerwicklung, insbesondere eines Fahrzeuggenerators, gemäß dem Oberbegriff des Patentanspruchs 1, sowie ein entsprechendes Verfahren gemäß dem Oberbegriff des Patentanspruchs 4.

Generatoren für die Automobiltechnik umfassen in der Regel einen Temperatursensor zum Schutz des Generators vor Überhitzung. Der Temperatursensor befindet sich üblicherweise am Generatorregler, der in einer baulichen Generatoreinheit mit integriert ist. Der Temperatursensor misst somit eine Reglertemperatur, auf deren Basis die Generatortemperatur abgeschätzt wird. Die Messung der Reglertemperatur hat den Vorteil, dass kein Temperatursensor in der Nähe der Statorwicklungen des Generators montiert werden muss. Ein wesentlicher Nachteil der Messung der Reglertemperatur besteht jedoch darin, dass die Abschätzung der Generatortemperatur relativ ungenau ist, da der Generatorregler und somit auch der Temperatursensor durch die Anordnung des Reglers im Zuleitungsstrom der Kühlluft gekühlt wird.

Eine weitere Möglichkeit zur Bestimmung der Generatortemperatur besteht darin, die Generatortemperatur aus einer Längs- und einer Querstromkomponente der Phasenströme abzuschätzen. Dies ist jedoch relativ aufwendig und ungenau.

Es ist daher die Aufgabe der vorliegenden Erfindung, ein Verfahren sowie eine Vorrichtung zur Bestimmung der Generatortemperatur zu schaffen, die bzw. das eine besonders einfache und genaue Bestimmung ermöglicht.

Gelöst wird diese Aufgabe gemäß der Erfindung durch die im Patentanspruch 1 sowie im Patentanspruch 4 angegebenen Merkmale. Weitere Ausgestaltungen der Erfindung sind Gegenstand von Unteransprüchen.

Der wesentliche Gedanke der Erfindung besteht darin, die Generatortemperatur auf der Grundlage des Widerstands der Erregerwicklung zu ermitteln. Der Widerstand wird erfindungsgemäß aus dem Erregerstrom und wenigstens einer im Erregerkreis abfallenden Spannung berechnet. Hierzu werden die entsprechenden Größen einer Auswerteeinheit zugeführt. Mit Kenntnis der Temperaturabhängigkeit des Widerstands kann die Temperatur genau bestimmt werden. Wegen des engen thermischen Kontakts der Erregerwicklung mit den Phasenwicklungen des Generators (die üblicherweise im Ständer des Generators angeordnet sind) kann somit auch der thermische Zustand Ständers ermittelt werden. Die indirekte Bestimmung der Generatortemperatur über die Widerstandsmessung der Erregerwicklung hat den Vorteil, dass kein Temperatursensor am Generator erforderlich ist und eine sehr genaue Bestimmung der Generatortemperatur durchgeführt werden kann. Durch die genauere Temperaturmessung kann wiederum ein besserer Hochtemperaturschutz des Generators erreicht werden. Darüber hinaus kann das Generatormoment genauer bestimmt werden, in dessen Berechnung die Temperatur mit eingeht.

Zur Bestimmung des Widerstands der Erregerwicklung wird vorzugsweise die am Erregerkreis abfallende Spannung gemessen. Andere im Erregerkreis vorhandene ohmsche Widerstände, wie z.B. die Widerstände der Zuleitungen oder Übergangswiderstände können zur Bestimmung des Erregerwicklungs-Widerstands herausgerechnet werden, sofern sie hinreichend bekannt sind. Wahlweise kann die Temperatur auch aus dem Widerstand des gesamten Erregerkreises ermittelt werden.

Gemäß einer bevorzugten Ausführungsform der Erfindung werden der gemessene Strom- und Spannungswert einer Prozessoreinheit zugeführt, die daraus die Generatortemperatur bestimmt. Dies kann z.B. mittels eines Kennfeldes (Widerstands-Temperatur-Kennlinie) oder eines mathematischen Modells erfolgen, mit dem die Temperatur berechnet wird.

Gemäß einer speziellen Ausführungsform der Erfindung wird die Temperatur der Erregerwicklung mit Hilfe einer Formel berechnet, die die Temperaturabhängigkeit des Widerstands beschreibt. Die Temperatur der Erregerwicklung $T_L$ lässt sich beispielsweise über die Beziehung:

$$T_L = \frac{U_{err} - U_{DS} - 2U_{Sch}}{R_{L,k} \cdot I_{err} \cdot alpha_{ref}} - \frac{1 + \dfrac{R_{Zul}}{R_{L,k}}}{alpha_{ref}} + T_{ref}$$

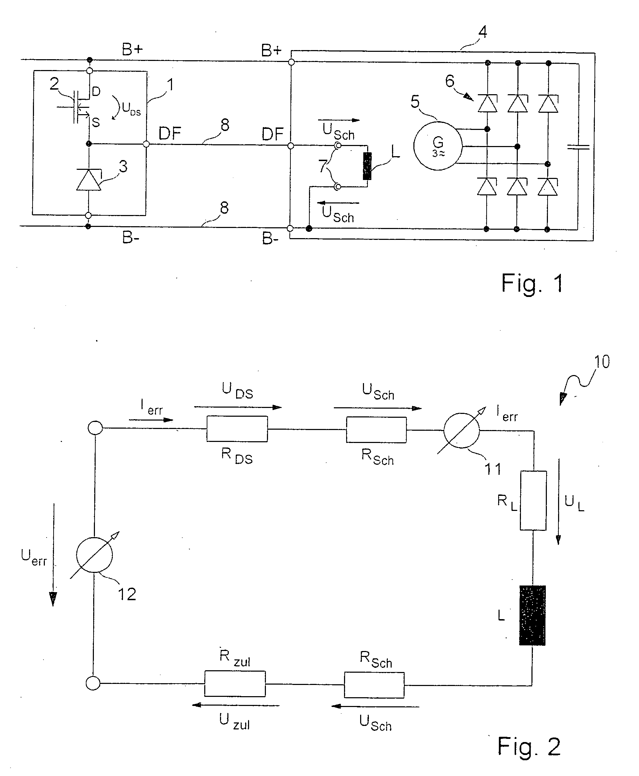

darstellen. Die einzelnen Parameter ergeben sich aus dem Ersatzschaltbild von Fig. 2 und werden bezüglich Fig. 2 nochmals ausführlich erläutert. Auch diese Variante ermöglicht eine sehr genaue Temperaturbestimmung.

Die Erfindung wird nachstehend anhand der beigefügten Zeichnungen beispielhaft näher erläutert. Es zeigen:

Fig. 1 eine schematische Darstellung einer Generatoranordnung mit einem Generator und einem Generatorregler;

Fig. 2 ein Ersatzschaltbild des Erregerstromkreises; und

Fig. 3 die wesentlichen Verfahrensschritte bei der Bestimmung der Generatortemperatur in Form eines Flußdiagramms.

Fig. 1 zeigt eine Generatoranordnung wie sie typischerweise in Kraftfahrzeugen eingebaut ist. Die Generatoranordnung umfaßt eine Generatoreinheit 4 (im folgenden als Generator bezeichnet), die von einem Verbrennungsmotor (nicht gezeigt) angetrieben wird und an den Klemmen B+, B- eine gewünschte Gleichspannung zur Versorgung eines Bordnetzes bereitstellt. Die Generatoranordnung umfaßt ferner einen Generatorregler 1, der die Bordnetzspannung auf einen gewünschten Wert regelt.

Der Generator 4, wie z.B. ein Klauenpolgenerator, hat eine im Rotor angeordnete Erregerwicklung L und eine dreiphasige Statorwicklung 5, in der die Phasenspannungen U,V,W induziert werden. Parallel zur Erregerwicklung L ist eine Freilaufdiode 3 angeordnet. Die Phasenspannungen werden durch einen Vollbrücken-Gleichrichter 6 mit mehreren Zenerdioden gleichgerichtet. Die erzeugte Gleichspannung liegt an den Klemmen B+,B- an.

Die Erregerwicklung L kann entweder mit einem vorgegebenen Tastverhältnis $T_{ein}/T_{aus}$ oder im Taktbetrieb betrieben werden. Der durch die Erregerwicklung fließende Erregerstrom $I_{err}$ wird vom Regler 1 eingestellt, der einen mit der Erregerwicklung L seriell verbundenen Transistor 2 ansteuert. Der Transistor 2 ist üblicherweise ein MOS-Transistor.

Zum Schutz des Generators 4 vor Übertemperatur sowie zur Bestimmung des Generatormoments muss die Generatortemperatur, d.h. insbesondere die Temperatur der Ständerwicklungen 5, sehr genau bestimmt werden. Hierzu wird eine Widerstandsmessung der Erregerwicklung L durchgeführt, die im folgenden anhand von Fig. 2 erläutert wird.

Fig. 2 zeigt ein Ersatzschaltbild des Erregerstromkreises 10 der Generatoranordnung. Der Erregerkreis 10 umfaßt (siehe Fig. 1) ausgehend von der Klemme B+ den MOS-Transistor 2, die Zuleitungen 8 zur Erregerwicklung L, und die Erregerwicklung L mit den Anschlüssen 7. Die Widerstände R und Induktivitäten dieser Elemente sind in Fig. 2 dargestellt. Dabei bezeichnet $U_{err}$ die Erregerspannung, $U_{DS}$ die Drain-Source-Spannung des Transistors 2, $U_{Sch}$ die an einem der Anschlüsse 7 abfallende Kontaktspannung, $U_L$ die an der Erregerwicklung L abfallende Spannung und $U_{Zul}$ die an den Zuleitungen 8 abfallende Spannung. Die Größe R bezeichnet den entsprechenden ohmschen Widerstand des jeweiligen Elements.

Der ohmsche Widerstand $R_L$ der Erregerwicklung L ist eine Funktion der Generatortemperatur. Durch Bestimmung des Widerstands $R_L$ der Erregerwicklung L (oder des gesamten Erregerkreises) kann somit indirekt deren Temperatur und wegen des engen thermischen Kontakts der Erregerwicklung L mit dem Ständer 5 des Generators 4 auch die Generatortemperatur $T_{Gen}$ ermittelt werden.

Eine Möglichkeit zur Bestimmung des Widerstands besteht darin, den Erregerstrom $I_{err}$ mittels des Strommessers 11 und die am gesamten Erregerkreis 10 abfallende Erregerspannung $U_{err}$ mittels eines Spannungsmessers 12 zu messen. Wenn die ohmschen Widerstände $R_{DS}$, $R_{Sch}$ und $R_{Zul}$ bekannt sind, kann daraus unmittelbar der ohmsche Widerstand $R_L$ der Erregerwicklung L berechnet werden. Aus dem Widerstand

$R_L$ kann die Generatortemperatur z.B. mittels eines Kennfeldes (Widerstands-Temperatur-Kennlinie) oder eines mathematischen Modells bestimmt werden. Wahlweise kann auch der Widerstand des gesamten Erregerkreises bestimmt und daraus die Generatortemperatur ermittelt werden.

Die Generatortemperatur $T_{Gen}$ läßt sich beispielsweise über die Beziehung:

$$T_L = \frac{U_{err} - U_{DS} - 2U_{Sch}}{R_{L,k} \cdot I_{err} \cdot alpha_{ref}} - \frac{1 + \dfrac{R_{Zul}}{R_{L,k}}}{alpha_{ref}} + T_{ref}$$

berechnen. Die vorstehend genannte Formel gilt insbesondere für ein Tastverhältnis $T_{ein} > 5\tau$ mit $\tau = R_F{*}L$ und $R_F = R_{DS} + 2R_{Sch} + R_{Zul} + R_L$, wenn das System eingeschwungen ist. Dabei ist $R_{L,k}$ der ohmsche Widerstand der Erregerwicklung bei kaltem Generator (20°C), $T_{ref}$ eine Referenztemperatur und alpha ein Temperaturkoeffizient (in Bezug auf die Referenztemperatur). Im Taktbetrieb der Leistungsendstufe 1 kann eine Korrektur der vorstehenden Beziehung vorgenommen werden.

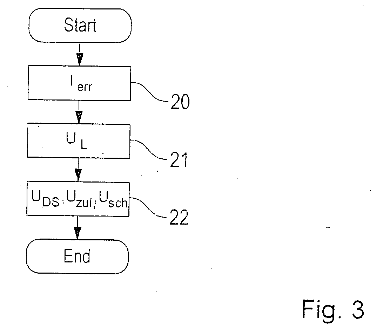

Fig. 3 zeigt die wesentlichen Verfahrensschritte zur Bestimmung der Generatortemperatur $T_{Gen}$. Dabei wird in einem ersten Schritt 20 der im Erregerkreis 10 fließende Erregerstrom $I_{err}$ gemessen und in Schritt 21 die im Erregerkreis 10 abfallende Spannung $U_{err}$ gemessen. In Schritt 22 wird daraus der Erregerwicklungs-Widerstand $R_L$ bestimmt und daraus die Generatortemperatur ermittelt.

Bezugszeichenliste

| | |
|---|---|
| 1 | Leistungsendstufe |
| 2 | Transistor |
| 3 | Freilaufdiode |
| 4 | Generator |
| 5 | Statorwicklungen |
| 6 | Gleichrichter |
| 7 | Anschlüsse der Erregerwicklung |
| 8 | Zuleitungen |
| 10 | Erregerkreis |
| 11 | Strommesser |
| 12 | Spannungsmesser |
| 20-23 | Verfahrensschritte |
| L | Erregerwicklung |
| $U_{DS}$ | Drain-Source-Spannung |
| $R_{DS}$ | Drain-Source-Widerstand |
| $U_{Sch}$ | Kontaktspannung |
| $R_{Sch}$ | Kontaktwiderstand |
| $U_L$ | Spannung der Erregerwicklung |
| $R_L$ | Wiederstand der Erregerwicklung |
| $U_{Zul}$ | Spannung der Zuleitungen 8 |
| $R_{Zul}$ | Widerstand der Zuleitungen 8 |
| $U_{err}$ | Erregerkreisspannung |

**Patentansprüche**

1. Vorrichtung zur Bestimmung der Generatortemperatur eines Generators (4), insbesondere eines Fahrzeuggenerators, mit einer Erregerwicklung (L), die in einem Erregerkreis (10) angeordnet ist, **gekennzeichnet durch**:

   - einen Strommesser (11), der den im Erregerkreis (10) fließenden Erregerstrom ($I_{err}$) misst,
   - einen Spannungsmesser (12), der eine im Erregerkreis (10) abfallende Spannung ($U_L$, $U_{err}$) misst, und
   - eine Auswerteeinheit zum Bestimmen der Generatortemperatur ($T_{Gen}$) auf der Grundlage des gemessenen Erregerstroms ($I_{err}$) und der gemessenen Spannung ($U_L$, $U_{err}$).

2. Vorrichtung nach Anspruch 1, **dadurch gekennzeichnet, dass** ein Spannungsmesser (12) vorgesehen ist, der die Erregerkreisspannung ($U_{err}$) misst.

3. Vorrichtung nach Anspruch 1 oder 2, **dadurch gekennzeichnet, dass** die Generatortemperatur anhand einer Formel:

$$T_R = \frac{U_{err} - U_{DS} - 2U_{Sch}}{R_{L,k} \cdot I_{err} \cdot alpha_{ref}} - \frac{1 + \dfrac{R_{Zul}}{R_{L,k}}}{alpha_{ref}} + T_{ref}$$

   Berechnet wird.

4. Verfahren zum Bestimmen der Generatortemperatur eines Generators (4), insbesondere eines Fahrzeuggenerators, mit einer Erregerwicklung (L), die in einem Erregerkreis (10) angeordnet ist, **gekennzeichnet durch** folgende Schritte:

   - Messen des im Erregerkreis (10) fließenden Erregerstroms ($I_{err}$),
   - Messen einer im Erregerkreis (10) abfallenden Spannung ($U_L$, $U_{err}$), und
   - Bestimmen der Generatortemperatur ($T_{Gen}$) auf der Grundlage des gemessenen Erregerstroms ($I_{err}$) und der gemessenen Spannung ($U_L$, $U_{err}$).

Fig. 1

Fig. 2

5

```
        ┌─────────────┐
        │    Start     │
        └──────┬──────┘
               │
               ▼
        ┌─────────────┐
        │    I_err     │────── 20
        └──────┬──────┘
               │
               ▼
        ┌─────────────┐
        │    U_L       │────── 21
        └──────┬──────┘
               │
               ▼
        ┌──────────────────┐
        │ U_DS; U_zul; U_sch │────── 22
        └────────┬─────────┘
                 │
                 ▼
        ┌─────────────┐
        │    End       │
        └─────────────┘
```

Fig. 3